# EUROPEAN PATENT APPLICATION

(11) **EP 4 564 477 A1**
(43) Date of publication of application: **04.06.2025**
(21) Application number: 23846090.1
(22) Date of filing: 26.06.2023
(51) Int. Cl.: H01M 4/505, C01G 45/00, C01G 49/00, C01G 51/00, C01G 53/00, H01M 4/525

(54) **POSITIVE ELECTRODE ACTIVE MATERIAL FOR SECONDARY BATTERY, AND SECONDARY BATTERY**

(30) Priority: 29.07.2022 JP 2022121757
(71) Applicant: Panasonic Intellectual Property Management Co., Ltd., Kadoma-shi, Osaka 571-0057 (JP)
(72) Inventor: ZHANG, Jin, Kadoma-shi, Osaka 571-0057 (JP); SAITO, Motoharu, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2023/023514
(87) International publication number: WO 2024/024356

(57) **Abstract**

A positive electrode active material for a secondary battery includes a lithium metal composite oxide having a crystal structure assignable to a space group Fm-3m. The lithium metal composite oxide includes at least Li and Mn. The lithium metal composite oxide has a crystallite size of 1 nm to 100 nm or less.

## Description

### [Technical Field]

The present disclosure relates to a positive electrode active material for a secondary battery and a secondary battery.

### [Background Art]

Secondary batteries, especially lithium-ion secondary batteries, have high power and high energy density and are therefore expected as power sources for small consumer applications, power storage devices, and electric vehicles. As a positive electrode active material for a lithium-ion secondary battery, a composite oxide of lithium and a transition metal (e.g., cobalt) has been used. High capacity can be achieved by replacing part of the cobalt with nickel.

Besides, in response to the demand of high-energy density, increasing attention has been paid in recent years to Li-excess lithium metal composite oxides based on Li₁₊ₓMn₁₋ₓO₂ having a rock-salt structure.

Patent Literature 1 discloses a positive electrode active material that has a crystal structure belonging to a space group Fm-3m and that is represented by a compositional formula Li₁₊ₓNb_{y}Me_{z}AₚO₂, where Me is a transition metal including Fe and/or Mn, 0 < x < 1, 0 < y < 0.5, 0.25 ≤ z < 1, A is an element other than Nb and Me, and 0 ≤ p ≤ 0.2, and Li₁₊ₚFe_{1-q}Nb_{q}O₂ where 0.15 < p ≤ 0.3 and 0 < q ≤ 0.3 is excluded).

### [Citation List]

### [Patent Literature]

Patent Literature 1: Japanese Patent No. 6197029

### [Summary of Invention]

### [Technical Problem]

Patent Literature 1 attempts to achieve high capacity by composition control (i.e., adding Nb). However, the capacity improvement effect is insufficient and there is still room for improvement.

### [Solution to Problem]

In view of the foregoing, one aspect of the present disclosure relates to a positive electrode active material for a secondary battery, including a lithium metal composite oxide having a crystal structure assignable to a space group Fm-3m, wherein the lithium metal composite oxide contains at least Li and Mn, and the lithium metal composite oxide has a crystallite size of 1 nm to 100 nm.

Another aspect of the present disclosure relates to a positive electrode active material for a secondary battery including a lithium metal composite oxide having a crystal structure assignable to a space group Fm-3m, wherein the lithium metal composite oxide contains at least Li and Mn, and in an X-ray diffraction (XRD) profile of the lithium metal composite oxide using CuKα radiation, a half-width of a diffraction peak attributed to the (200) plane ranges from 0.1° to 1.8° on a 2θ basis.

Yet another aspect of the present disclosure relates to a secondary battery including a positive electrode, a negative electrode, an electrolyte, and a separator provided between the positive electrode and the negative electrode, wherein the positive electrode includes the positive electrode active material for a secondary battery described above.

While the novel features of the invention are set forth particularly in the appended claims, the invention, as to both organization and content, will be better understood and appreciated, along with other objects and features thereof, from the following detailed description taken in conjunction with the drawings.

### [Advantageous Effect of Invention]

According to the present disclosure, it is possible to realize a secondary battery with high energy density.

### [Brief Description of Drawing]

[FIG. 1]

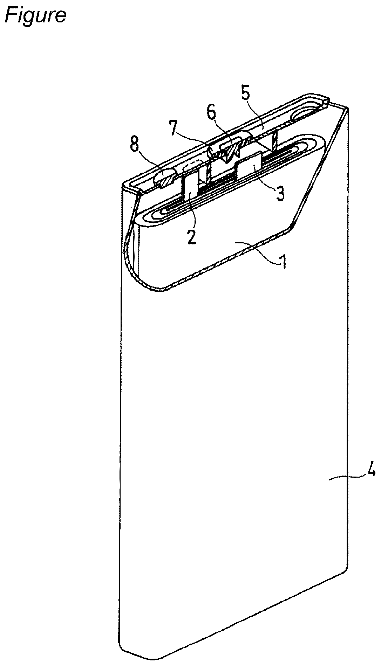

FIG. 1 is a partially cut-away schematic perspective view of a secondary battery according to one embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

In the following description, the word "comprise" or "include" is an expression including meanings of "comprise (or include)", "essentially consist of", and "consist of".

The secondary battery includes at least nonaqueous electrolyte secondary batteries such as a lithium-ion battery and a lithium-metal secondary battery.

A positive electrode active material for a secondary battery according to an embodiment of the present disclosure includes a lithium metal composite oxide having a crystal structure assignable to a space group Fm-3m. The lithium metal composite oxide includes at least Li and Mn. The lithium metal composite oxide has a crystallite size of 1 nm to 100 nm. The crystallite size of the lithium metal composite oxide is preferably 80 nm or less, and more preferably 60 nm or less. The crystallite size of the lithium metal composite oxide is preferably 4 nm or more, and more preferably 5 nm or more or 6 nm or more. The upper and lower limits of the crystallite size described above can be arbitrarily combined.

The crystallite size is calculated from the half width of the diffraction peak attributed to the (200) plane based on the Scherrer equation in an X-ray diffraction (XRD) profile of the lithium metal composite oxide using CuKα radiation. The positive electrode active material for a secondary battery may have a half width of the diffraction peak attributed to the (200) plane of, for example, 0.1° to 1.8° on a 2θ basis in the X-ray diffraction (XRD) profile of the lithium metal composite oxide using the CuKα radiation.

Typical lithium metal composite oxides have a large crystallite size, and their capacity is often increased when the crystal structure is sufficiently grown. Besides, small lithium metal composite oxides with a crystallite size of 100 nm or less are thought to significantly exert effect of promoting ion release and absorption due to the increased surface area of grain boundaries, which contributes to higher capacity.

The lithium metal composite oxide has a crystal structure based on a rock-salt structure belonging to the space group Fm-3m. That is, this lithium metal composite oxide has a crystal structure similar to the rock-salt structure belonging to the space group Fm-3m. The lithium metal composite oxide has a crystal structure based on a rock-salt structure, typified by NaCl, for example, and may have a structure in which oxygen atoms are arranged at an anion site while Li atoms and metal atoms other than the Li atoms are irregularly arranged at a cation site.

The lithium metal composite oxide preferably contains Mn as a transition metal element. The molar ratio of Mn in the lithium metal composite oxide may be larger than the molar ratio of the sum of the transition metal elements or metal elements except Mn. A ratio b/c of the atomic number b of Mn to the atomic number c of the metal element M other than Li and Mn may be 1 or more and 12 or less in the lithium metal composite oxide.

The lithium metal composite oxide may be one based on a composite oxide of Li and Mn. Li-excess Li₁₊ₓMn₁₋ₓO₂ and Li₁₊ₓMn_{1-x-y}M_{y}O₂ may be included as the composite oxide of Li and Mn as above. In Li-excess composite oxides with a crystal structure similar to the rock-salt structure assigned to the space group Fm-3m, it is thought that the capacity is increased more significantly by reducing the crystallite size to 100 nm or less than by setting a crystal structure definitely assigned to the space group Fm-3m.

The lithium metal composite oxide may contain fluorine (F). Fluorine can substitute for oxygen atoms at the anion site in the above crystal structure. This stabilizes the Li-excess state, and can provide higher capacity. Furthermore, as a result of substitution by fluorine atoms, the average discharge potential rises. Note that the Li-excess state refers to a state in which the number of Li atoms occupying the composite oxide is larger than the number of transition metal atoms.

In the above lithium metal composite oxide, since the Li arrangement at the cation site is random and Li bonding state is various, the distribution of voltage associated with Li release is accordingly wide. Therefore, it may be difficult to use as capacity for the tail portion of the low-potential side of the voltage distribution. However, the introduction of fluorine atoms shifts the distribution of voltage associated with Li release toward the higher voltage side, making it easy to use the tail portion as capacity. This further increases the available capacity.

The lithium metal composite may be one, for example, represented by a compositional formula LiₐMn_{b}M_{c}O_{d}Fₑ, where 1 ≤ a ≤ 1.4, 0.5 ≤ b ≤ 0.9, 0 ≤ c ≤ 0.4, 1.33 ≤ d ≤ 2, 0 ≤ e ≤ 0.67, and 1.7 ≤ d + e ≤ 2 are satisfied. Here, M includes at least one element except Li and Mn. d + e may be 1.94 or less, 1.9 or less, or 1.8 or less.

As shown in the above compositional formula, some of the oxygen atoms at the anion site may be substituted with the fluorine atoms. This stabilizes the state in which Li is excessive (a > 1), and can achieve high capacity. Furthermore, as described above, the average discharge potential rises, further increasing the available capacity.

The lithium metal composite oxide may contain an element M other than Li and Mn. The element M may include at least one selected from the group consisting of Fe, Ge, Si, Ga, Ni, Co, Sn, Cu, Nb, Mo, Bi, V, Cr, Y, Ti, Zr, Zn, Na, K, Ca, Mg, Pt, Au, Ag, Ru, Ta, W, La, Ce, Pr, Gd, Sm, Eu, Yb, Dy, and Er. The lithium metal composite oxide preferably contains, among them, at least one selected from the group consisting of Ni, Sn, Mo, W, Ta, and Zn as the metal element M.

The lithium metal composite oxide may contain Ti as the element M other than Li and Mn. Ti acts to increase the capacity of the lithium metal composite oxide having the above crystal structure. Although the reasons for this are not clear, it is thought as one reason that in the presence of Ti in the form of Ti⁴⁺ with empty d-orbitals in the lithium metal composite oxide, the highly symmetric rock-salt structure tends to be stabilized, and rock-salt structure can be stabilized even after repeated charging and discharging. When the lithium metal composite oxide contains Ti, a ratio Mn/Ti of the number of atoms of Mn to the number of atoms of Ti in the lithium metal composite oxide is preferably 7 or more.

The lithium metal composite oxide may be obtained by firing a mixture of raw materials of the elements constituting the lithium metal composite oxide. The firing promotes growth of crystals having a structure similar to the rock-salt structure belonging to the space group Fm-3m, resulting in a large-crystallite-size lithium metal composite oxide. Subsequent grinding can control the crystallite size to the range of 1 nm to 100 nm. Examples of the raw materials of the elements constituting the lithium metal composite oxide that can be used include lithium manganate (LiMnO₂) and oxides of the element M. The raw materials may be Li₂O and Mn₂O₃. Lithium fluoride (LiF) can be used as a fluorine source.

The secondary battery according to an embodiment of the present disclosure will be described next in detail. The secondary battery includes a positive electrode, a negative electrode, an electrolyte, and a separator, such as the following, for example.

### [Positive electrode]

The positive electrode includes a positive electrode current collector and a positive electrode mixture layer formed on a surface of the positive electrode current collector and containing the positive electrode active material. As the positive electrode, a positive electrode for the above secondary battery is used. The positive electrode mixture layer can be formed, for example, by applying a positive electrode slurry of a positive electrode mixture dispersed in a dispersion medium onto a surface of the positive electrode current collector, followed by drying. Here, the positive electrode mixture contains a positive electrode active material, a binder, and the like. The applied film after drying may be rolled as necessary. The positive electrode mixture layer may be formed on one or both of the surfaces of the positive electrode current collector.

The positive electrode mixture layer contains a positive electrode active material as an essential component, and may contain, for example, a binder, a thickener, a conductive agent, and a positive electrode additive as optional components. As the binder, the thickener, and the conductive agent, any known materials can be used.

The positive electrode active material includes the above-described lithium metal composite oxide having a crystal structure similar to the rock-salt structure belonging to the space group Fm-3m. The composite oxide is formed from secondary particles in which a plurality of primary particles are aggregated, for example. The primary particles generally have a particle diameter of 0.01 µm to 1 µm. The composite oxide has an average particle diameter of, for example, 1 µm to 50 µm, and preferably 2 µm to 25 µm. Here, the average particle diameter of the composite oxide means a median diameter (D50) at which the cumulative frequency is 50% in a volume-based particle size distribution, and can be measured using a laser diffraction type particle size distribution analyzer. The D10 diameter (diameter at which the cumulative frequency is 10% in the volume-based particle size distribution) of the composite oxide may be 0.6 µm or less.

Preferably, the composite oxide has a BET surface area of 0.01 m²/g to 15 m²/g.

Note that the content of the elements constituting the composite oxide can be measured using an inductively coupled plasma atomic emission spectroscopy instrument (ICP-AES), an electron probe microanalyzer (EPMA), or an energy dispersive X-ray spectroscopy instrument (EDX), for example.

The positive electrode active material may be a mixture of the above lithium metal composite oxide having a crystal structure similar to the rock-salt structure and any known lithium metal composite oxide that is not the above lithium metal composite oxide. Examples of the lithium metal composite oxide that is not the above lithium metal composite oxide include lithium transition metal composite oxides such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transitional element (e.g., including at least one selected from the group consisting of Mn, Fe, Co, and Ni). Here, 0 ≤ a ≤ 1.2, 0 ≤ b ≤ 0.9, and 2.0 ≤ c ≤ 2.3. Note that the value a, which indicates the molar ratio of lithium, increases or decreases with charging or discharging.

The shape and thickness of the positive current collector can be selected according to the shape and range of the negative current collector, respectively. The examples of the material of the positive electrode current collector include stainless steel, aluminum, aluminum alloys, and titanium.

### [Negative electrode]

The negative electrode includes, for example, a negative electrode current collector and a negative electrode active material layer formed on a surface of the negative electrode current collector. The negative electrode active material layer can be formed, for example, by applying a negative electrode slurry of a negative electrode mixture dispersed in a dispersion medium onto a surface of the negative electrode current collector, followed by drying. Here, the negative electrode mixture contains a negative electrode active material, a binder, and the like. The applied film after drying may be rolled as necessary. In other words, the negative electrode active material may be a mixture layer. Furthermore, a lithium metal foil or a lithium alloy foil may be attached to the negative electrode current collector. The negative electrode active material layer may be formed on one or both of the surfaces of the negative electrode current collector.

The negative electrode active material layer contains a negative electrode active material as an essential component, and may contain, for example, a binder, a conductive agent, and a thickener as optional components. As the binder, the conductive agent, and the thickener, any known materials can be used.

The negative electrode active material contains any of a material that electrochemically absorbs and releases lithium ions, a lithium metal, and a lithium alloy. As the material that electrochemically absorbs and releases lithium ions, a carbon material, an alloy-based material, or the like is used. Examples of the carbon material include graphite, graphitizable carbon (soft carbon), and non-graphitizable carbon (hard carbon). In particular, graphite is preferable that has low irreversible capacity and excellent stability during charging and discharging. The alloy-based material includes at least one type of metal capable of forming an alloy with lithium, examples of which include silicon, tin, silicon alloys, tin alloys, and silicon compounds. Materials in which these are bonded to oxygen, such as silicon oxide and tin oxide, can be used.

The alloy-based material containing silicon may be, for example, a silicon composite material including a lithium-ion conductive phase and silicon particles dispersed in the lithium-ion conductive phase. As the lithium-ion conductive phase, any of a silicon oxide phase, a silicate phase, and a carbon phase can be used, for example. The principal component (e.g., 95 to 100% by mass) of the silicon oxide phase can be silicon dioxide. In particular, a composite material constituted by a silicate phase and silicon particles dispersed in the silicate phase is preferable because of its high capacity and low irreversible capacity.

The silicate phase may contain, for example, at least one selected from the group consisting of a Group I element and a Group II element in the long form of the periodic table. Examples of the Group I element and the Group II element in the long form of the periodic table that can be used include lithium (Li), potassium (K), sodium (Na), magnesium (Mg), calcium (Ca), strontium (Sr), and barium (Ba). Other elements such as aluminum (Al), boron (B), lanthanum (La), phosphorus (P), zirconium (Zr), and titanium (Ti) can be included. In particular, a silicate phase containing lithium (referred to also as lithium silicate phase) is preferable because of its low irreversible capacity and high initial charge-discharge efficiency.

The lithium silicate phase may be an oxide phase containing lithium (Li), silicon (Si), and oxygen (O), and may contain another element. The atomic ratio O/Si of O to Si in the lithium silicate phase is, for example, more than 2 and less than 4. Preferably, O/Si is more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z} (0 < z <2). z preferably satisfies the relationship 0 < z < 1, and more preferably satisfies z = 1/2. Examples of the element other than Li, Si, and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be constituted by, for example, shapeless carbon with low crystallinity (i.e., amorphous carbon). The shapeless carbon may be, for example, hard carbon, soft carbon, or other.

As the negative electrode current collector, a non-porous conductive substrate (e.g., a metal foil) or a porous conductive substrate (e.g., a mesh body, a net body, or a punching sheet) is used. Examples of the material of the negative electrode current collector include stainless steel, nickel, nickel alloys, copper, and copper alloys.

### [Electrolyte]

The electrolyte contains a solvent and a solute dissolved in the solvent. The solute is an electrolyte salt that ionically dissociates in the electrolyte. The solute can contain a lithium salt, for example. The components of the electrolyte other than the solvent and the solute are additives. Various additives can be contained in the electrolyte. The electrolyte is normally used as it is in a liquid state, or may be used in a state in which its fluidity is restricted by a gelling agent or the like.

The solvent is an aqueous solvent or a nonaqueous solvent. Examples of the nonaqueous solvent that can be used include a cyclic carbonate, a chain carbonate, a cyclic carboxylic acid ester, and a chain carboxylic acid ester. Examples of the cyclic carbonate include propylene carbonate (PC), ethylene carbonate (EC), and vinylene carbonate (VC). Examples of the chain carbonate include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more types.

Other examples of the nonaqueous solvent include cyclic ethers, chain ethers, nitriles such as acetonitrile, and amides such as dimethylformamide.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers.

Examples of the chain ethers include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

These solvents may be fluorinated solvents in which some of hydrogen atoms are substituted with fluorine atoms. As a fluorinated solvent, fluoroethylene carbonate (FEC) may be used.

Examples of the lithium salt that can be used include lithium salts of chlorine-containing acids (e.g., LiClO₄, LiAlCl₄, and LiB₁₀Cl₁₀), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN(FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). These lithium salts may be used singly or in combination of two or more types.

The concentration of the lithium salt in the electrolyte may be 1 mol/liter or more and 2 mol/liter or less, or may be 1 mol/liter or more and 1.5 mol/liter or less. By controlling the lithium salt concentration in the above range, an electrolyte having excellent ion conductivity and appropriate viscosity can be obtained. However, the lithium salt concentration is not limited to the above.

The electrolyte may contain other known additives. Examples of the additives include 1,3-propanesultone, methyl benzenesulfonate, cyclohexylbenzene, biphenyl, diphenyl ether, and fluorobenzene.

### [Separator]

A separator is provided between the positive electrode and the negative electrode. The separator has a high level of ion permeability and a moderate level of mechanical strength and insulation properties. As the separator, a microporous thin film, a woven fabric, a nonwoven fabric, and the like can be used, for example. The material of the separator is preferably a polyolefin such as polypropylene or polyethylene.

One example of the structure of the secondary battery is a structure in which a nonaqueous electrolyte and an electrode group of a positive electrode and a negative electrode wound with a separator interposed therebetween are housed in an outer case. Alternatively, another form of the electrode group may be adopted in place of the electrode group of the winding type, such as a stack electrode group in which a positive electrode and a negative electrode are stacked with a separator therebetween. The secondary battery may be of any type such as a cylindrical, prismatic, coin, button, or laminate type.

FIG. 1 is a partially cut-away schematic perspective view of a prismatic secondary battery according to one embodiment of the present disclosure.

The battery includes a bottomed prismatic battery case 4, and an electrode group 1 and a nonaqueous electrolyte (not shown) housed in the battery case 4. The electrode group 1 includes a long negative electrode, a long positive electrode, and a separator interposed therebetween. The negative current collector of the negative electrode is electrically connected, via a negative electrode lead 3, to a negative electrode terminal 6 provided on a sealing plate 5. The negative electrode terminal 6 is insulated from the sealing plate 5 by a resin gasket 7. The positive current collector of the positive electrode is electrically connected, via a positive electrode lead 2, to the back side of the sealing plate 5. That is, the positive electrode is electrically connected to the battery case 4 serving also as a positive electrode terminal. The periphery of the sealing plate 5 is fitted to the open end of the battery case 4, and the fitted portion is laser welded. The sealing plate 5 has an electrolyte injection port, which is closed with a sealing plug 8 after injection.

Note that the secondary battery may be of any type with a metal battery case, such as a cylindrical, coin, or button type. Alternatively, the second battery may be a laminated battery including a battery case of a laminated sheet being a laminated body of a barrier layer and a resin sheet. In the present disclosure, the type, shape, and the like of the secondary battery are not limited particularly.

### <<Supplementary Notes>>

According to the description of the embodiments described above, the following techniques are disclosed.

### (Technique 1)

A positive electrode active material for a secondary battery, including
a lithium metal composite oxide having a crystal structure assignable to a space group Fm-3m, wherein
the lithium metal composite oxide contains at least Li and Mn, and
the lithium metal composite oxide has a crystallite size of 1 nm to 100 nm.

### (Technique 2)

The positive electrode active material for a secondary battery according to Technique 1, wherein the crystallite size of the lithium metal composite oxide is 80 nm or less. (Technique 3)

The positive electrode active material for a secondary battery according to Technique 1, wherein the crystallite size of the lithium metal composite oxide is 60 nm or less.

### (Technique 4)

A positive electrode active material for a secondary battery, including a lithium metal composite oxide having a crystal structure assignable to a space group Fm-3m, wherein
the lithium metal composite oxide contains at least Li and Mn, and
in an X-ray diffraction (XRD) profile of the lithium metal composite oxide using CuKα radiation, a half-width of a diffraction peak attributed to a (200) plane ranges from 0.1° to 1.8° on a 2θ basis.

### (Technique 5)

The positive electrode active material for a secondary battery according to any one of Techniques 1 to 4, wherein
a ratio b/c of the number b of atoms of Mn to the number c of atoms of a metal element M other than Li and Mn in the lithium metal composite oxide is 1 or more and 12 or less.

### (Technique 6)

The positive electrode active material for a secondary battery according to any one of Techniques 1 to 5, wherein the lithium metal composite oxide contains fluorine.

### (Technique 7)

The positive electrode active material for a secondary battery according to any one of Techniques 1 to 6, wherein
the lithium metal composite oxide is represented by a compositional formula LiₐMn_{b}M_{c}O_{d}Fₑ, where M includes at least one element except Li and Mn, and 1 ≤ a ≤ 1.4, 0.5 ≤ b ≤ 0.9, 0 ≤ c ≤ 0.4, 1.33 ≤ d ≤ 2, 0 ≤ e ≤ 0.67, and 1.7 ≤ d + e ≤ 2 are satisfied.

### (Technique 8)

The positive electrode active material for a secondary battery according to Technique 7, wherein
the element M includes at least one selected from the group consisting of Fe, Ge, Si, Ga, Ni, Co, Sn, Cu, Nb, Mo, Bi, V, Cr, Y, Ti, Zr, Zn, Na, K, Ca, Mg, Pt, Au, Ag, Ru, Ta, W, La, Ce, Pr, Gd, Sm, Eu, Yb, and Dy.

### (Technique 9)

A secondary battery including: a positive electrode; a negative electrode; an electrolyte; and a separator provided between the positive electrode and the negative electrode, wherein
the positive electrode includes the positive electrode active material for a secondary battery according to any one of Techniques 1 to 8.

Hereinafter, the present disclosure will be specifically described based on examples and comparative examples. However, the present disclosure is not limited to the following examples.

### <Example 1>

### [Positive Electrode Production]

Manganese oxide (Mn₂O₃), lithium carbonate (Li₂CO₃), and titanium oxide (TiO₂) were mixed in a predetermined mass ratio. Here, the predetermined mass ratio was a specific ratio that resulted in the preparation composition of the lithium metal composite oxide being Li_{1.22}Mn_{0.61}Ti_{0.175}O_{1.87}. The resulting mixture was fired at 950°C for 10 hours to obtain a lithium metal composite oxide.

For the sintered lithium metal composite oxide, the composition of the composite oxide was identified by ICP emission spectrometry. In addition, the oxygen content was evaluated using an oxygen-nitrogen analyzer (product of HORIBA, Ltd., EMGA-920). The composition of the sintered lithium metal composite oxide was Li_{1.22}Mn_{0.61}Ti_{0.175}O_{1.78}, and the oxygen content rate decreased from that at the preparation.

The sintered lithium metal composite oxide was charged into a planetary ball mill (Premium-Line P7 manufactured by Fritsch Japan Co., Ltd., rotational speed: 300 rpm, vessel capacity: 45 mL, ball: Zr ball with φ3 mm), and processed at room temperature in an Ar atmosphere for 12 hours (12 times a cycle of 1 hour of operation followed by 10 minutes of rest), thereby obtain a lithium metal composite oxide having a predetermined composition.

For the obtained lithium metal composite oxide, measurement and analysis on the X-ray diffraction pattern of the composite oxide were performed using a powder X-ray diffractometer using CuKα radiation. The results confirmed that from the number of the XRD peaks and the peak positions, the composite oxide had a crystal structure based on the rock-salt type belonging to the space group Fm-3m. Furthermore, the half width of the diffraction peak attributed to the (200) plane of the composite oxide was determined. From the half width, the crystallite size was determined based on the Scherrer equation.

The resulting lithium metal composite oxide, acetylene black, and polyvinylidene fluoride were mixed in a solid mass ratio of 7:2:1 to prepare a positive electrode mixture slurry with N-methyl-2-pyrrolidone (NMP) as a dispersing medium. Next, the positive electrode mixture slurry was applied onto a positive electrode core body made of aluminum foil. The applied film was dried, compressed, and then cut to a predetermined electrode size to obtain a positive electrode.

### [Electrolyte Preparation]

To a mixed solvent obtained by mixing ethylene carbonate (EC), ethyl methyl carbonate (EMC), and dimethyl carbonate (DMC) in a predetermined volume ratio, LiPF₆ was added as a lithium salt to prepare a nonaqueous electrolyte.

### [Test Cell Fabrication]

A test cell was fabricated using the above positive electrode together with a negative electrode made of lithium metal foil as a counter electrode. The above positive electrode and the negative counter electrode were arranged so as to face each other with a separator interposed therebetween to form an electrode body, and the electrode body was housed in a coin-shaped outer can. After the electrolyte was injected into the outer can, the outer can was sealed to obtain a coin-shaped secondary battery A1 for testing.

### <Examples 2 to 8 and Comparative Example 1>

In Example 1, the pulverizing conditions (rotational speed and processing time) of the lithium metal composite oxide after sintering using the planetary ball mill were changed as shown in Table 1. Otherwise, test cells were fabricated in the same manner as in Example 1 to obtain secondary batteries A1 to A8 of Examples 2 to 8.

Furthermore, a secondary battery B1 of Comparative Example 1 was obtained by fabricating a test cell, using one obtained by pulverizing the lithium metal composite oxide after sintering in a mortar without performing the planetary ball milling.

### <Comparative Example 2>

Manganese oxide (Mn₂O₃), lithium carbonate (Li₂CO₃), and titanium oxide (TiO₂) were mixed in a predetermined mass ratio. Here, the predetermined mass ratio was a ratio that resulted in the preparation composition of the lithium metal composite oxide being Li_{1.07}Mn_{0.8}Ti_{0.133}O₂. The mixture was fired at 1050°C for 10 hours to obtain a lithium metal composite oxide.

A secondary battery B2 of Comparative Example 2 was obtained by fabricating a test cell, using one obtained by pulverizing the lithium metal composite oxide after sintering in a mortar, without performing the planetary ball milling.

### <Examples 9 to 23>

The raw materials of elements constituting each respective lithium metal composite oxide were mixed in a predetermined mass ratio so as to achieve a corresponding one of the preparation compositions shown in Table 2. With respect to each of the elements of the raw materials, oxides (CoO, NiO, Fe₂O₃, TiO₂, and MgO) of the elements were used as Co raw material, Ni raw material, Fe raw material, Ti raw material, and Mg raw material, respectively. Furthermore, lithium fluoride (LiF) was used as F raw material.

The sintered lithium metal composite oxide was charged into a planetary ball mill (Premium-Line P7 manufactured by Fritsch Japan Co., Ltd., rotational speed: 300 rpm, vessel capacity: 45 mL, ball: Zr ball with φ3mm), and processed at room temperature in an Ar atmosphere for 12 hours (12 times a cycle of 1 hour of operation followed by 10 minutes of rest), thereby obtaining a lithium metal composite oxide having a predetermined composition.

Using the obtained lithium metal composite oxides, test cells were fabricated in the same manner as that for Example 1 to obtain secondary cells A9 to A23 of Examples 9 to 23.

For Examples 2 to 23 and Comparative Examples 1 and 2, the X-ray diffraction pattern of each of the composite oxides after sintering (and after ball milling as necessary) was also measured and analyzed using the powder X-ray diffractometer using CuKα radiation. The results confirmed that from the number of the XRD peaks and the peak positions, each composite oxide had a crystal-structure based on the rock-salt type assigned to the space group Fm-3m. Furthermore, the half width of the diffraction peak attributed to the (200) plane of the composite oxide was determined. From the half width, the crystallite size was determined based on the Scherrer equation.

### [Evaluation]

### (Initial Discharge Capacity)

The secondary batteries were charged at a constant current of 0.1 C in a normal temperature environment until the battery voltage reached 4.95 V Thereafter, constant voltage charging was performed at a constant voltage of 4.95 V until the current decreased to 0.01 C. After 20-minute rest, constant current discharge was performed at a constant current of 0.1 C until the battery voltage reached 2.5 V. Thereafter, the discharge capacity was measured. The discharge capacity per mass of the positive electrode active material (lithium metal composite oxide) was determined to taken as an initial discharge capacity C₀.

With respect to each of the batteries A1 to A8 of Examples 1 to 8 and the batteries B1 and B2 of Comparative Examples, Table 1 shows the evaluation results of the initial discharge capacity C₀, together with the preparation composition of the lithium metal composite oxide used as the positive electrode active material in the battery, conditions at the firing, conditions at the ball milling, the half width (FWHM) of the XRD diffracted peak attributed to the (200) plane, and the crystallite size.

With respect to each of the batteries A9 to A23 of Examples 9 to 23, Table 2 shows the evaluation results of the initial discharge capacity C₀, together with the preparation composition of the lithium metal composite oxide used as the positive electrode active material in the battery, the half width of the XRD diffracted peak attributed to the (200) plane (FWHM), and the crystallite size.

As shown in Tables 1 and 2, the batteries A1 to A23, which had a crystallite size of the lithium metal composite oxide in the range of 1 nm to 100 nm, exhibited improved initial discharge capacity compared to the batteries B1 and B2.

**[Table 1]**

| Battery | Positive electrode active material | | | | | Discharge capacity (mAh/g) |
|---|---|---|---|---|---|---|
| | Preparation composition | Firing | Ball milling | Half width (°/2θ) | Crystallite size (nm) | |
| A1 | Li_{1.22}Mn_{0.61}Ti_{0.175}O_{1.87} | 950°C/10h | 300 rpm/12h | 0.15 | 14.6 | 258 |
| A2 | Li_{1.22}Mn_{0.61}Ti_{0.175}O_{1.87} | 950°C/10h | 400 rpm/12 h | 1.66 | 5.39 | 277 |
| A3 | Li_{1.22}Mn_{0.61}Ti_{0.175}O_{1.87} | 950°C/10h | 150 rpm/12h | 0.16 | 5.84 | 190 |
| A4 | Li_{1.22}Mn_{0.61}Ti_{0.175}O_{1.87} | 950°C/10h | 150 rpm/2.5 h | 0.12 | 72.2 | 182 |
| A5 | Li_{1.22}Mn_{0.61}Ti_{0.175}O_{1.87} | 950°C/10h | 150 rpm/5 h | 0.13 | 67.7 | 182 |
| A6 | Li_{1.22}Mn_{0.61}Ti_{0.175}O_{1.87} | 950°C/10h | 150 rpm/10 h | 0.18 | 51.0 | 183 |
| A7 | Li_{1.22}Mn_{0.61}Ti_{0.175}O_{1.87} | 950°C/10h | 150 rpm/15 h | 0.18 | 49.7 | 177 |
| A8 | Li_{1.22}Mn_{0.61}Ti_{0.175}O_{1.87} | 950°C/10h | 150 rpm/20 h | 0.19 | 48.1 | 198 |
| B1 | Li_{1.22}Mn_{0.61}Ti_{0.175}O_{1.87} | 950°C/10h | - | 0.09 | 104 | 87 |
| B2 | Li_{1.07}Mn_{0.8}Ti_{0.133}O₂ | 1050°C/10h | - | 0.08 | 113 | 55 |

**[Table 2]**

| Battery | Positive electrode active material | | | Discharge capacity (mAh/g) |
|---|---|---|---|---|
| | Preparation composition | Half width (°/2θ) | Crystallite size (nm) | |
| A9 | I Li_{1.0}Mn_{0.75}Co_{0.25}O_{1.875} | 1.60 | 5.99 | 165 |
| A10 | Li_{1.3}Mn_{0.75}Ni_{0.25}O_{2.025} | 0.85 | 10.5 | 173 |
| A11 | Li_{1.2}Mn_{0.8}Ni_{0.2}O₂ | 0.82 | 10.2 | 170 |
| A12 | Li_{1.22}Mn_{0.61}Ni_{0.175}O_{1.7} | 2.02 | 4.4 | 166 |
| A13 | Li_{1.2}Mn_{0.75}Ni_{0.25}O_{1.98} | 0.82 | 10.9 | 169 |
| A14 | Li_{1.0}Mn_{0.75}Ni_{0.25}O_{1.5} | 0.94 | 9.5 | 163 |
| A15 | Li_{1.22}Mn_{0.61}Fe_{0.175}O_{1.79} | 0.84 | 10.7 | 245 |
| A16 | Li_{1.22}Mn_{0.61}Ti_{0.075}Fe_{0.1}O_{1.82} | 1.65 | 5.40 | 211 |
| A17 | Li_{1.22}Mn_{0.61}Ti_{0.1}Fe_{0.075}O_{1.83} | 1.61 | 5.56 | 225 |
| A18 | Li_{1.22}Mn_{0.61}Ti_{0.125}Fe_{0.05}O_{1.84} | 0.82 | 10.9 | 235 |
| A19 | Li_{1.22}Mn_{0.61}Ti_{0.05}Fe_{0.125}O_{1.81} | 1.74 | 5.13 | 216 |
| A20 | Li_{1.03}Mn_{0.77}Mg_{0.19}O_{1.87} | 0.85 | 10.5 | 170 |
| A21 | Li_{1.2}Mn_{0.4}Mg_{0.4}O_{1.6} | 0.096 | 3.16 | 181 |
| A22 | Li_{1.15}Mn_{0.38}Mg_{0.47}O_{1.82} | 0.43 | 21.0 | 169 |
| A23 | Li_{1.14}Mn_{0.87}Ti_{0.19}F_{0.1}O_{1.9} | 0.59 | 15.0 | 226 |

### [Industrial Applicability]

With the secondary battery according to the present disclosure, it is possible to provide a secondary battery having high capacity and excellent cycle characteristics. The secondary battery according to the present disclosure is useful for a main power supply for, for example, mobile communication equipment and portable electronic devices.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as falling within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A positive electrode active material for a secondary battery, comprising
a lithium metal composite oxide having a crystal structure assignable to a space group Fm-3m, wherein
the lithium metal composite oxide contains at least Li and Mn, and
the lithium metal composite oxide has a crystallite size of 1 nm to 100 nm.

2. The positive electrode active material for a secondary battery according to claim 1, wherein the crystallite size of the lithium metal composite oxide is 80 nm or less.

3. The positive electrode active material for a secondary battery according to claim 1, wherein the crystallite size of the lithium metal composite oxide is 60 nm or less.

4. A positive electrode active material for a secondary battery, comprising
a lithium metal composite oxide having a crystal structure assignable to a space group Fm-3m, wherein
the lithium metal composite oxide contains at least Li and Mn, and
in an X-ray diffraction (XRD) profile of the lithium metal composite oxide using CuKα radiation, a half-width of a diffraction peak attributed to a (200) plane ranges from 0.1° to 1.8° on a 2θ basis.

5. The positive electrode active material for a secondary battery according to any one of claims 1 to 4, wherein
a ratio b/c of a number b of atoms of Mn to a number c of atoms of a metal element M other than Li and Mn in the lithium metal composite oxide is 1 or more and 12 or less.

6. The positive electrode active material for a secondary battery according to any one of claims 1 to 4, wherein
the lithium metal composite oxide contains fluorine.

7. The positive electrode active material for a secondary battery according to any one of claims 1 to 4, wherein
the lithium metal composite oxide is represented by a compositional formula LiₐMn_{b}M_{c}O_{d}Fₑ, where M includes at least one element except Li and Mn, and 1 ≤ a ≤ 1.4, 0.5 ≤ b ≤ 0.9, 0 ≤ c ≤ 0.4, 1.33 ≤ d ≤ 2, 0 ≤ e ≤ 0.67, and 1.7 ≤ d + e ≤ 2 are satisfied.

8. The positive electrode active material for a secondary battery according to claim 7, wherein
the element M includes at least one selected from the group consisting of Fe, Ge, Si, Ga, Ni, Co, Sn, Cu, Nb, Mo, Bi, V, Cr, Y, Ti, Zr, Zn, Na, K, Ca, Mg, Pt, Au, Ag, Ru, Ta, W, La, Ce, Pr, Gd, Sm, Eu, Yb, and Dy.

9. A secondary battery comprising: a positive electrode; a negative electrode; an electrolyte; and a separator provided between the positive electrode and the negative electrode, wherein
the positive electrode includes the positive electrode active material for a secondary battery according to any one of claims 1 to 4.
